# EUROPEAN PATENT SPECIFICATION

(11) **EP 2 855 925 B1**
(45) Date of publication and mention of the grant of the patent: **04.04.2018**
(21) Application number: 13726493.3
(22) Date of filing: 28.05.2013
(51) Int. Cl.: F03D 1/06

(54) **BLADE ASSEMBLY FOR A WIND TURBINE ROTOR**
SCHAUFELANORDNUNG FÜR EINEN WINDTURBINENROTOR
ENSEMBLE DE PALE POUR ROTOR DE TURBINE ÉOLIENNE

(30) Priority: 30.05.2012 EP 12170113
(43) Date of publication of application: 08.04.2015
(73) Proprietor: youWINenergy GmbH, 26135 Oldenburg (DE)
(72) Inventor: ROHDEN, Rolf, 26607 Aurich (DE)
(74) Representative: Alt, Michael
(86) International application number: PCT/EP2013/060988
(87) International publication number: WO 2013/178639

(56) References cited:
- US-A1- 2007 253 824
- US-A1- 2009 155 084
- US-A1- 2011 020 126
- US-A1- 2011 081 247

## Description

The present subject matter relates to a blade assembly for a wind turbine rotor and a method for assembling a blade for a wind turbine rotor.

In a commonly known wind turbine, a plurality of blades is mounted to a hub. The hub is connected to a generator system. The generator system generates electricity based on the rotational power caused by wind energy exerted on the blades. In commonly known wind turbine installations, the hub is rotatably mounted with the axis being aligned substantially horizontally; such an installation is referred to as a horizontal axis wind turbine.

### BACKGROUND

In recent years, the length of wind turbine blades has increased in order to provide wind turbine installations with an output of as much as 1MW (el) or more in a single turbine. Consequently, specific restrictions relating to the transportation of elements of such wind turbine installations are introduced. However, large wind turbine installations provide an increased output, an enhanced efficiency, and besides others, several economic improvements.

Conventional rotor systems are set up with single part blades which are mounted to the hub at the construction site of the wind turbine installation. Due to the fact that large-scale wind turbine installations are frequently set up at remote locations, restrictions with respect to transportation of blades having a length of 50m or more introduce a limitation on the power output of the single wind turbine and consequently decrease the economic and energetic efficiency.

Conventional large wind turbine blades comprise two or more blade sections so as to conveniently enable the transportation to the construction site of the wind turbine installation. The blade sections are assembled to form the complete blade at the construction site and the complete blade is mounted to the hub of the wind turbine in order to complete the rotor.

A related blade assembly for a wind turbine rotor is disclosed in US 2007/253824 A1.

### SUMMARY

Drawbacks with conventional rotor system are overcome by the subject-matter of the independent claims. Advantageous embodiments are subject to the dependent claim.

The present subject matter relates to a blade assembly for a wind turbine rotor which enables an enhanced mountability for forming a blade and which provides an increased strength and operational safety of the assembled blade assembly.

Further, the present subject matter relates to an improved method for manufacturing a blade for a wind turbine rotor which method is simplified and provides an increased strength and operational safety of the assembled blade.

According to the basic concept of the subject matter, a blade assembly for a wind turbine rotor is provided, the blade assembly comprising at least two blade sections being longitudinally joinable at respective joining end portions for forming a blade, one of said blade sections having at least one cavity in its joining end portion and the other of said blade sections having least one protrusion at its joining end portion, wherein said cavity is contractible to a contracted position in a direction which is substantially perpendicular to a longitudinal direction of the blade.

The concept underlying this arrangement provides various advantageous effects. That is, the contractible cavity enables the smooth introduction of the protrusion into the cavity when in the non-contracted position, and the contracted position forms a strong joint between the protrusion and the inner wall of the cavity. Consequently, the cavity according to the present subject matter is a collapsible cavity.

According to an embodiment of the present subject matter, a cross section of said cavity is smaller in said contracted position than in an expanded position which is also defined as non-contracted position. The relation of the cross section in the contracted and the non-contracted positions provides the advantageous joining as the smooth and forceless introduction is possible while the close contact between the mating surfaces is achievable. The outer shape or form of the blade section in the non-contracted position according to the present subject matter is preferably larger than in the contracted position. That is, when the blade section having the cavity is in the contracted position, the outer shape of this blade section corresponds to the target shape of the blade in the transition of the blade sections. In other words, at the transition of the blade sections, the outer shapes or contours of the blade sections coincide in the contracted position of the cavity, i.e., without creating a step between the blade sections, while at the transition between the blade sections, the outer shape or contour of the blade section having said cavity is larger in the non-contracted or expanded position than the outer shape or contour of the blade section having no cavity.

According to an embodiment of the present subject matter, a material of said blade section having said cavity is deformable at least at said joining end portion. According to this concept, the contractibility of the cavity is achieved by specific properties relating to the material. Such properties can relate to the use of foam portions in sections which are to be provided with the required flexibility or elasticity. Further, the design of the fibers, i.e., the pattern of the fibers in such sections

Further to the basic concept of the subject matter, at least one interruption of a material is formed extending from an inner surface of said at least one cavity to an outer surface of said blade section having said at least one cavity. According to this concept, the contractibility of the cavity is achieved by specific properties relating to the form or shape of the blade sections.

Properties relating to the material or properties relating to the form or shape of the blade sections are cited. However, it is within the scope of the present subject matter to combine the properties relating to the material with the properties relating to the form or shape of the blade sections.

The provision of at least one interruption of material which is formed extending from an inner surface of said cavity to an outer surface of said blade section having said cavity provides an enhanced joining operation for inserting the protrusion into the cavity as the cavity is extendable and contractible due to said at least one interruption of material.

Further, said at least one interruption of material extends from an end of said blade section at its joining end portion in the longitudinal direction of said blade section. The provision of the at least one interruption of material which extends from an end of said blade section at its joining end portion in the longitudinal direction of said blade section provides an enhanced property of the blade section having the cavity for contracting or expanding the cavity for inserting and joining the protrusion of the other blade section.

According to an embodiment of the present subject matter, said at least one interruption of material is formed as at least one slit. The at least one slit according to the embodiment of the present subject matter is easy to form in the material forming the blade section having the cavity and can have predetermined dimensions for enabling a proper contractibility or expandability of a cavity. The slit can be formed by cutting or in the course of molding the blade section.

The interruption of material can be embodied as at least one slit as indicated above. As alternative, the interruption of material can be formed as non linear slit such as zigzag cut or as meander shaped cut in the blade section having said cavity with respect to the longitudinal direction of the blade section. It is possible to form the interruption of material by an array of holes, wherein the holes extend from the inner surface of the cavity to the outer surface of the blade section having the cavity. The holes can be circular holes. Alternatively, the holes can have an elliptic shape allowing their contraction and, thus, the contraction of the cavity. It is even possible to arrange only a single hole in the blade section. As further alternative, the interruption of material can be formed as at least one partial slit, which extends from the inner surface of the cavity to towards the outer periphery of the blade section having the cavity, wherein the slit terminates before reaching the outer surface of the cavity. The above forms of the interruption of material can be appropriately combined.

According to an embodiment of the present subject matter, the cavity is expandable to an expanded position with said at least one slit being opened and contractible to a contracted position with said at least one slit being closed. As indicated above, the dimensions of the at least one slit can be predefined in order to provide the blade section, i.e., the joining end portion thereof, with the required properties for easily inserting the protrusion into the cavity and for bringing the cavity to a contracted position for joining the protrusion of one of said blade sections to said cavity of the other of said blade sections.

According to an embodiment of the present subject matter, the cross-sectional shapes of said protrusion and of said cavity are non-circular. Providing the cross-sectional shapes of the cavity and the protrusion as non-circular cross-sectional shapes provides a locking and thus prevents a rotation or tilt of one blade section with respect to the other in the joining operation or after the assembly is complete.

According to an embodiment, inner engagement means are provided in an inner surface of said cavity and outer engagement means are provided in an outer surface of said protrusion, wherein said inner engagement means and said outer engagement means are locked to each other when said cavity is in a contracted position.

According to this embodiment, a specific locked condition is enabled by providing such engagement means in the inner surface of said cavity and the outer surface of said protrusion. The engagement means are arranged such that an engagement is created between the inner engagement means and the outer engagement means in order to prevent the relative movement of the blade sections after the assembly for forming a complete blade is completed. The engagement means can comprise single or multiple elements, such as protruding elements and/or recesses on the outer surface of the protrusion and/or the inner surface of the cavity.

According to an embodiment of the present subject matter, the protrusion is insertable into the cavity when the cavity is in an expanded position whereas the protrusion, when inserted into the cavity is locked in the cavity when said cavity is in the contracted position.

Providing the joining end portion having the cavity with a specific property of enabling an expansion or contraction of the cavity provides the specific advantage that the engagement means on the outer surface of the protrusion and the inner surface of the cavity can be brought into efficient engagement by positioning the cavity to the contracted position. It is a specific advantage that, according to this embodiment, a locked condition can be enabled between the blade sections, while an easy insertion of the protrusion into the cavity in the course of joining the blade sections is possible.

According to an embodiment of the present subject matter, said inner and outer engagement means are formed as inner serrations at the inner surface of said cavity and outer serrations at the outer surface of said protrusion, which serrations are oriented substantially perpendicularly to the longitudinal direction of the respective blade sections. Serrations can be easily formed on the outer surface of the protrusion or the inner surface of the cavity and can bear a high load in particular in the longitudinal direction of the blade which is important for an operational safety of the wind turbine having such a blade when rotating. According to an embodiment of the present subject matter, said inner serrations and said outer serrations are arranged to provide a locking engagement of said protrusion and said cavity when said cavity is in the contracted position.

According to this embodiment, the locking engagement is achieved by bringing the cavity in the contracted position. As the cavity is in the contracted position in the blade which is formed by the blade assembly according to the present subject matter, an improved operational safety is provided by a locking engagement between the protrusion and the cavity due to the inherent strength of such an arrangement.

It is not essential that the serrations are oriented substantially perpendicularly to the longitudinal direction of the respective blade sections. The serrations can be inclined as long as a locking engagement is achieved and a force in the longitudinal direction of the blade can be transmitted between the blade sections when assembled.

According to an embodiment of the present subject matter, two slits are provided in said joining end portion of said blade section having said cavity, wherein said two slits are provided at opposite sides of said cavity. Providing two slits in the joining end portion provides a joining structure which further simplifies the joining operation as the operation of bringing the cavity from the expanded position to the contracted position can be achieved easier and with a higher accuracy. Further, the material of the blade section having the cavity is less affected by bringing the cavity from the expanded position to the contracted position.

According to an embodiment of the present subject matter, at least one predetermined flow path is formed in a boundary between the outer surface of said protrusion and the inner surface of said cavity when said protrusion is inserted in said cavity and said cavity is in the contracted position.

According to an embodiment of the present subject matter, a plurality of flow paths is formed which are parallel and/or branched with respect to each other.

According to an embodiment of the present subject matter, said flow path is zigzag or meander shaped.

According to an embodiment of the present subject matter, said flow path has an inlet for introducing resin, in particular thermosetting resin, to flow along said flow path and an outlet for discharging drain resin as overflow.

The above concept including at least one predetermined flow path which is formed in the boundary between the outer surface of the protrusion and the inner surface of the cavity can be employed for further enhancing the strength and operational safety of the blade assembly when assembled. In particular, it is possible to introduce resin into the flow path which is arranged at predetermined positions with a predetermined shape, such as zigzag or meandered shape, in order to provide an optimum joint between the blade sections, in particular, between the outer surface of the protrusion and the inner surface of the cavity. The flow path can also be extended to additional areas of the boundary region of the blade sections, such as the end surface of the protrusion and the bottom surface of the cavity and/or the axially directed surfaces at the ends of the respective blade sections which can be brought into contact by joining said blade sections.

Providing an outlet for discharging drain resin as overflow as the advantage that the procedure of filling the flow path with resin can be monitored or confirmed by monitoring the overflow of resin from the outlet. Due to the fact that the flow path can be formed a single duct between the inlet and the outlet, the complete filling of the flow path can be confirmed by monitoring the outflow of resin from the outlet. However, it is possible to provide a plurality of flow paths which are parallel or which can be formed as branched paths having more than one inlet or outlet.

According to an embodiment of the present subject matter, the blade assembly is joinable to form a blade by inserting said protrusion into said cavity with said cavity being in an expanded position, contracting said cavity by closing said at least one slit and introducing resin into said inlet with an amount which fills said flow path and curing, preferably thermosetting, said resin.

The above concept provides a blade which is formed by a blade assembly comprising at least two blade sections which does not require an axial or longitudinal pressing operation for pressing the protrusion into the cavity in order to form a fixed joint between the at least two blade sections. Rather, the protrusion of one of the blade sections can be easily introduced into the cavity in the other of the blade sections without a high longitudinal pressure being exerted, while at the same time a rigid and strong joint between the two blade sections is achieved by bringing the cavity to the contracted position thereby bringing the shape of the inner surface of the cavity to the shape of the outer surface of the protrusion. Introducing resin into the inlet with an amount which fills said flow path and curing the resin provides a permanent joint between the blade sections in addition to the optional engagement between the engagement means provided on the outer surface of the protrusion and the inner surface of the cavity.

According to an embodiment of the present subject matter, in addition to said cavity, one or more additional cavities are provided in the same joining end portion, and in addition to said protrusion, one or more additional protrusions are provided in the same joining end portion, wherein the number of cavities corresponds to the number of protrusions. The protrusions and cavities are spaced and can prevent a tilt or rotation of the blade sections with respect to each other when joined.

According to an embodiment of the present subject matter, the cavity and the protrusion can have an elliptic form.

A method for assembling a blade for a wind turbine rotor from at least the assembly indicated above comprises the following steps:
- keeping said cavity in an expanded position;
- longitudinally inserting said protrusion into said cavity;
- bringing said cavity to a contracted position; and
- applying a step of keeping said cavity in the contracted position.

The above method is preferably applicable to the blade assembly discussed above and provides similar advantages and effects as the blade assembly.

According to an embodiment of the present subject matter, the step of bringing said cavity to a contracted position comprises pressing said outer surface of said blade section having said cavity.

According to this embodiment, the cavity is in the expanded position while no force or pressure is exerted to the outer surface of the blade section having the cavity, whereas the cavity can be brought to the contracted position by exerting a force or pressure to the outer surface of the blade section having said cavity. That is, the blade section having the cavity will be available at the construction site with said cavity being in the expanded position such that the protrusion of the other blade section can be easily inserted into the cavity. After that, the outer surface of the blade section having the cavity is pressed such that the cavity is brought to the contracted position.

According to an embodiment of the present subject matter, the step of keeping said cavity in the contracted position comprises applying resin by supplying or pressing said resin into an area between said protrusion and said cavity and/or into an area of said interruption of material.

Due to the fact that the material for manufacturing blades and the present blade sections can be set such that it exhibits a specific elasticity, the contracted position of the cavity must be maintained even after releasing the pressure to the outer surface of the blade section having the cavity. This is achieved by supplying or pressing resin at least into an area between the protrusion and said cavity and/or into an area of said interruption of material such as said at least one slit. Resin can be cured and achieve an adhering joint in order to maintain the contracted position of the cavity. In particular, this contracted position is a permanent state after curing the resin. Further, the resin creates a rigid and strong joint between the blade sections after curing.

According to an embodiment of the present subject matter, the method further comprises a step of monitoring parameters while pressing said resin, said parameters including an amount of applied resin, a temperature of said resin, and a pressure of said resin.

Monitoring specific parameters optimizes the joining procedure and provides an enhanced safety due to specific knowledge of the single procedure of joining the blade sections to each other. Furthermore, the parameters which are monitored can be controlled to optimum values which increase the strength and quality of the joint of the blade sections.

According to an embodiment of the present subject matter, the method further comprises monitoring an overflow of said resin and controlling the amount of applied resin and/or confirming a sufficient amount of applied resin based on the monitored amount of overflow.

According to this embodiment, a monitored amount of resin is supplied to the area between said protrusion and said cavity and the complete filling of the area, such as the flow path can be confirmed by the monitored amount of the overflow which is evaluated based on the amount of applied or supplied resin. Furthermore, this embodiment provides the option of revealing improper operations, for example, due to an unintended leakage of resin from damaged locations of the blade sections.

According to an embodiment of the present subject matter, the method comprises a step of curing said resin and thereby joining said at least two blade sections to each other.

According to an embodiment of the present subject matter, the step of curing said resin includes thermosetting said resin by applying heat to said resin. The resin improves the joint between the blade sections. Using a thermosetting resin further increases the strength of the joint of the blade sections.

According to an embodiment of the present subject matter, a blade is provided which is assembled by a blade assembly as indicated above or assembled by a method as indicated above. Further, this blade can be used for forming a wind turbine rotor which can, in turn, be employed for wind turbine installations.

### BRIEF DESCRIPTION OF THE DRAWINGS

Fig. 1 shows a blade formed by a blade assembly according to a first embodiment of the invention.
Fig. 2 shows the joining end portions of the blade sections before joining according to the first embodiment of the invention.
Fig. 3 shows the joining end portions of the blade sections before joining according to a second embodiment of the invention.
Figs. 4a-4d show various views of the joining end portions of the blade sections before joining according to a third embodiment of the invention.
Figs. 5a-5d show various views of the joining end portions of the blade sections before joining according to a fourth embodiment of the invention.
Figs. 6a-6e show various views of the joining end portions of the blade sections before joining according to a fifth embodiment of the invention.
Fig. 7 shows the joining end portions of a related blade sections before joining according to a sixth embodiment useful for understanding the invention.

### DESCRIPTION OF THE EMBODIMENTS

In the following, embodiments of the present subject matter are explained based on the drawings. It is noted that the drawings show specific embodiments as explained below and further alternative modifications as specified in the description are at least in half not illustrated.

Particularly, the first to fifth embodiments described herein below are covered by the presently claimed invention. The sixth embodiment relates to an example useful for understanding the invention

### FIRST EMBODIMENT

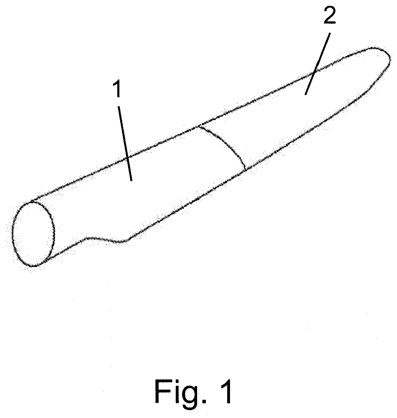

Fig. 1 shows the blade for a wind turbine rotor of the present subject matter in an assembled condition. As can be seen in Fig. 1 the blade is formed by two blade sections 1, 2, wherein one blade section 1 is formed as root blade section 1 to be mounted to the hub of the wind turbine rotor (not shown) and another blade section 2 is directly mounted to the root blade section 1 as tip blade section 2. The tip blade section 2 forms a remarkable part of the complete blade as can be derived from the drawing. However, it is possible to form the tip blade section 2 in any proportion with respect to the complete blade as long as the concept of the present subject matter is realized.

The outer appearance of the assembled blade shown in Fig. 1 does not differ from blades to be mounted to a hub of wind turbine rotor according to the prior art, whereas the structure for joining the blade sections 1, 2 to each other forms the basic concept of the present subject matter.

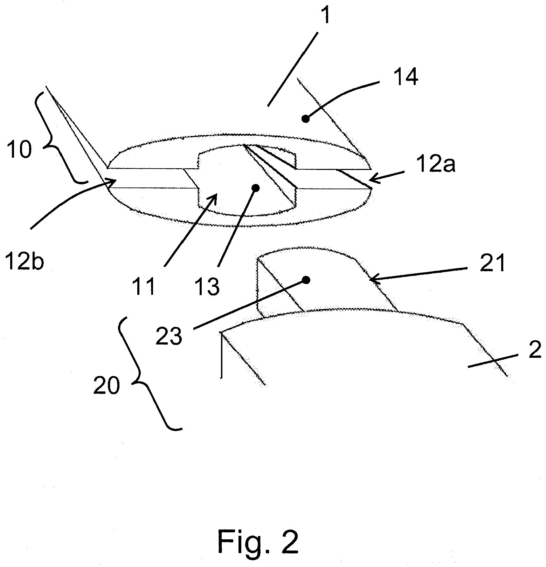

Fig. 2 shows the joining sections of blade sections according to the present subject matter.

As can be derived from Fig. 2, the root blade section 1 comprises a joining end portion 10 at the end of the root blade section 1 opposite to a portion thereof which is to be mounted to the blade. Further, the tip blade section 2 comprises a joining end portion 20 which is arranged at an end of the tip blade section 2 which is opposite to a tip end of the tip blade section 2 which tip end section forms a tip of the blade when assembled.

In the following, the specific arrangement of the joining end portions 10, 20 according to the first embodiment shown in Fig. 2 are explained. First, the joining end portion 20 of the tip blade section 2 is explained. The tip blade section 2 comprises a protrusion 21 which is provided at end of the tip blade section 2. This protrusion 21 protrudes from a portion of the tip blade section 2 and is formed with a cross-sectional appearance which is smaller than the outer cross-sectional appearance of the tip blade section 2 at the joining end portion 20. The protrusion 21 is formed with a non-circular cross-sectional shape, i.e., with an approximately rectangular shape with two opposite sides of the protrusion 21 being slightly convex. The protrusion 21 comprises an outer surface 23. In the present embodiment, the cross-sectional shape of the protrusion 21 is basically constant or unchanged along the longitudinal direction of the protrusion 21 which longitudinal direction approximately corresponds to the longitudinal direction of the tip blade section 2 or the blade when assembled.

The joining end portion 10 of the root blade section 1 is formed with a cavity 11 which extends in the longitudinal direction of the root blade section 1 which longitudinal direction approximately corresponds to the longitudinal direction of the root blade section 1 or the blade in the assembled state. The cavity 11 has a long non-circular cross-section and extends to the inside of the root blade section 1 in the longitudinal direction with a depth which is at least corresponding to the length of the protrusion 21 formed at the joining end portion 20 of the tip blade section 2.

In the present embodiment, the joining end portion 10 of the root blade section 1 is provided with two slits 12a, 12b which are formed as one form of interruption of material as can be derived from Fig. 2. The slits 12a, 12b extend from the cavity 11 to the outside of the root blade section 1. In the present embodiment, the slits 12a, 12b extend not only from the inside of the cavity 11 to the outside of the root blade section 1 but also in the longitudinal direction from the end of the root blade section 1 towards the opposite end with respect to the joining end portion 10. Furthermore, the relationship between the slits 12a and 12b is such that the extension direction from the inside of the cavity 11 to the outside of the root blade section 1 is aligned, in particular, forms a straight line from one side of the root blade section 1 to the other side thereof with respect to a direction which is perpendicular to the longitudinal direction of the root blade section 1 or the blade in an assembled state. Furthermore, both slits 12a, 12b extend in the same direction, i.e., in the longitudinal direction of the root blade section 1 to a predetermined position. In the present embodiment, the slits 12a, 12b extend at least with the same length in the longitudinal direction of the root blade section 1 as the cavity 11. Preferably, the slits 12a, 12b extend beyond the bottom of the cavity 11.

As can be seen in Fig. 2, the slits 12a, 12b are opened in order to space the slits 12a, 12b such that gaps are formed by the slits 12a, 12b. The position shown in Fig. 2 is referred to as expanded position of the cavity 11. That is, the cross-section of the cavity 11 is expanded and the cavity 11 itself is slightly opened, i.e., enlarged.

The position shown in Fig. 2 which is the expanded position of the cavity 11 is present when no external loads are exerted to the joining end portion 10 of the root blade section 1.

As the material which is used for forming the blade sections 1, 2 is elastic to a predetermined extent, the gaps formed by the slits 12a, 12b can be closed by pressing the joining end portion 10 of the root blade section 1 in a direction which is perpendicular to the longitudinal extension of the slits 12a, 12b and perpendicular to the extension of the slits 12a, 12b from the inside of the cavity 11 to the outside of the root blade section 1. By pressing the joining end portion 10 of the root blade section 1, the cavity 11 is brought from an expanded position shown in Fig. 2 to a contracted position in which the slits 12a, 12b are closed.

In the present embodiment, the cross-sectional shape of the cavity 11 substantially corresponds to the cross-sectional shape of the protrusion 21 when the cavity 11 is in the contracted position which is achieved by closing the slits 12a, 12b as stated above. In the following, a procedure for joining the tip blade section 2 to the root blade section 1 is explained. As stated above, the cavity 11 is in the expanded position when no external force is applied to the outer surface 14 of the joining end portion 10 of the root blade section 1. For joining the tip blade section 2 to the root blade section 1, the cavity 11 is maintained in the expanded position such that the cross-sectional shape of the cavity 11 is larger than the cross-sectional shape of the protrusion 21.

In this condition, the protrusion 21 is inserted into the cavity 11 which is in the expanded position. This operation includes aligning the root blade section 1 includes aligning the root blade section 1 and the tip blade section 2 with respect to the longitudinal direction such that due to the dimensional relationship between the cavity 11 and the protrusion 21, the process of inserting the protrusion 21 into the cavity 11 can be performed without pressing the blade sections 1, 2 to each other in the longitudinal direction of the blade sections 1, 2. Rather, the protrusion 21 can be easily inserted into the cavity 11.

With the protrusion 21 being introduced into the cavity 11 which is in the expanded position, the root blade section 1 and the tip blade section 2 are aligned. In this situation, the outer surface 14 of the joining end portion 10 of the root blade section 1 is pressed in order to close the gaps which are formed by the slits 12a, 12b. By closing the gaps which are formed by the slits 12a, 12b, the cavity 11 is brought to the contracted position as discussed above. In the contracted position of the cavity 11, the cross-sectional shape of the cavity 11 substantially corresponds to the cross-sectional shape of the protrusion 21 such that the inner surface of the cavity 11 is brought in contact to the outer surface 23 of the protrusion 21.

The pressure which is exerted from the inner surface 13 of the cavity 11 to the outer surface 23 of the protrusion 21 is a joining force which creates a joint between the tip blade section 2 and the root blade section 1.

In this situation, i.e., while the outer surface 14 of the joining end portion 10 of the root blade section 1 is pressed in order to close the gaps formed by the slits 12a, 12b, the contracted position of the cavity 11 with the inserted protrusion 21 is maintained by gluing the inner surface 13 of the cavity 11 to the outer surface 23 of the protrusion 21 and by gluing the surfaces forming the slits12a, 12b to each other such that the contracted position of the cavity 11 is maintained.

In the present embodiment, the adhesive, such as resin, is applied to the surfaces 13, 23 to be glued prior to inserting the protrusion 21 into the cavity 11. By pressing the outer surface 14 of the joining end portion 10 of the root blade section 1 and maintaining this state for a predetermined period of time which is sufficient for curing the applied adhesive, the state of the contracted position of the cavity 11 is maintained and the blade sections 1, 2 are permanently joined to each other.

According to the basic concept of the present subject matter, the protrusion 21 is not pressed with a remarkable force into the cavity 11 in order to achieve the close contact between the outer surface 23 of the protrusion 21 and the inner surface 13 of the cavity 11. Rather, the close contact between the outer surface 23 of the protrusion 21 and the inner surface 13 of the cavity 11 is achieved by pressing the outer surfaces 14 of the root blade section 1 at the joining end portion 10 thereof which is enabled by providing the slits 12a, 12b which extend from the inside of the cavity 11 to the outside of the blade section 1 in the present embodiment. Due to the fact that the force for inserting the protrusion 21 into the cavity 11 is very small in relation to the prior art, the problem of wearing and damaging the protrusion 21 and the cavity 11 by assembling the blade sections 1, 2 is overcome.

According to the first embodiment, the contracted position of the cavity 11 is achieved by gluing the inner surface 13 of the cavity 11 to the outer surface 23 of the protrusion 21 and by gluing the surfaces inside the slits 12a, 12b which are brought into contact by bringing the cavity 11 to the contracted position. The gluing according to the first embodiment is achieved by applying adhesive or resin to the surfaces 13, 23 to be glued before inserting the protrusion 21 into the cavity 11.

According to a modification of the present subject matter, the resin or adhesive is applied to the surfaces 13, 23 to be glued after introducing the protrusion 21 into the cavity 11 and after applying the pressure to the outer surface 23 of the joining end portion 10 of the root blade section 1 for closing the gaps formed by the slits 12a, 12b and thereby bringing the cavity 11 to the contracted position.

In the present modification, the arrangement discussed above for the first embodiment is completely the same except the following differences. Those surfaces 13, 23 which are brought in close contact to each other by pressing the joining end portion 10 of the root blade section 1 are provided with a flow path having an inlet and an outlet. In particular, the outer surface 23 of the protrusion 21 is provided with a recess forming one portion of the flow path, whereas the inner surface 13 of the cavity 11 is provided with a recess forming the other portion of the flow path. The positional relationship between the recess in the outer surface 23 of the protrusion 21 and of the recess formed in the inner surface 13 of the cavity 11 is such that the flow path is formed by the two recesses which flow path is arranged in the boundary region between the outer surface 23 of the protrusion 21 and the inner surface 13 of the cavity 11 when the cavity 11 is in the contracted position.

Furthermore, an inlet is formed in the area of one of the slits 12a, 12b in the same manner which in that is connected to one end of the flow path formed when the protrusion 21 is inserted in the cavity 11. In addition, an outlet is provided in the area of one of the slits 12a, 12b in the same manner as discussed before and connected to the other end of the flow path such that the adhesive, such as resin or the like can be introduced into the inlet, supplied along the flow path and discharged at the outlet in order to confirm the completeness of filling into the flow part. In summary, according to the present modification, the protrusion 21 is inserted into the cavity 11 and, as discussed with respect to the embodiment above, a pressure is exerted to the joining end portion 10 of the root blade section 1 in order to bring the cavity 11 to the contracted position. By doing so, the flow path is formed in the boundary between the outer surface 23 of the protrusion 21 and the inner surface 13 of the cavity 11 as well as in the surfaces of the slits 12a, 12b. The flow path is filled by adhesive, such as curable resin, and the contracted position of the cavity 11 is maintained for a predetermined time. This predetermined time is related to the time required for curing the adhesive filled into the flow path.

After curing the adhesive or resin, the joint between the root blade section 1 and the tip blade section 2 is made permanent.

### SECOND EMBODIMENT

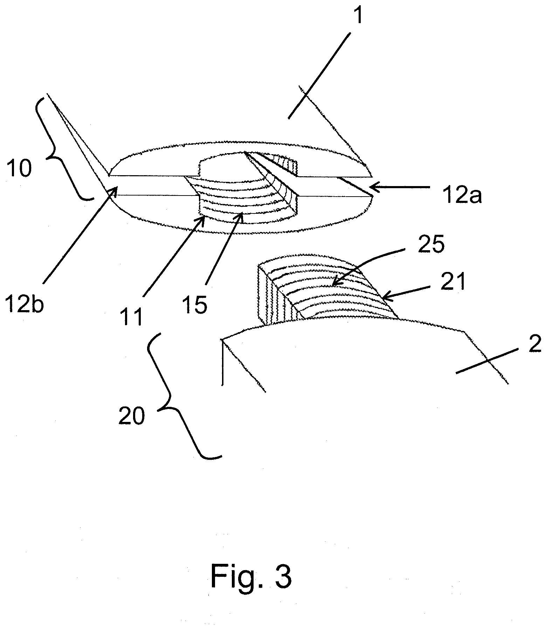

A second embodiment is explained based on the illustration of Fig. 3.

The arrangement of the second embodiment is basically the same as the arrangement of the first embodiment shown in Fig. 2 except the following differences.

The inner surface 13 of the cavity 11 and the outer surface 23 of the protrusion 21 are provided with engagement means 15, 25 as explained below. The inner surface 13 of the cavity 11 is provided with inner engagement means 15 which are formed as serrations in the inner surface 13 of the cavity 11 as shown in Fig. 3. The outer surface 23 of the protrusion 21 is provided with outer engagement means 25 which are formed as serrations in the present embodiment. The serrations on the outer surface 23 of the protrusion 21 and the serrations formed in the inner surface 13 of the cavity 11 are formed such that a locking engagement is achieved by inserting the protrusion 21 into the cavity 11 and bringing the cavity 11 to the contracted position. That is, by bringing the cavity 11 to the contracted position, as discussed above, the inner surface 13 of the cavity 11 is brought in close contact to the outer surface 23 of the protrusion 21. By providing serrations on these surfaces, a locking engagement is provided as the serrations respectively engage to each other.

The serrations can be formed as mated grooves and fins in the surfaces which engage to each other by bringing the cavity 11 to the contracted position.

The specific advantage of this embodiment is explained as follows.

As the cavity 11 according to the present subject matter exhibits an expanded position and a contracted position, it is possible to provide engagement means 15 on the inner surface 13 of the cavity 11 and/or the outer surface 23 of the protrusion 21 as such engagement means 25 generally deviate from the surface of the elements to be joined. That is, the engagement means 15, 25 formed in the inner surface 13 of the cavity 11 and the outer surface 23 of the protrusion 21 can be formed as portions which protrude from the surface or as areas which form recesses which can be brought into engagement to each other. Consequently, providing the cavity 11 with the specific property of being in the expanded position and being contractible to the contracted position enables the provision of such a locking engagement based on elements which deviate from the surfaces 13, 23 to be mated.

The following procedure of joining the tip blade section 2 to the root blade section 1 according to the second embodiment is the same as in the first embodiment. It is to be noted that the modification of the first embodiment relating to the provision of a flow path is applicable to the second embodiment as well.

### THIRD EMBODIMENT

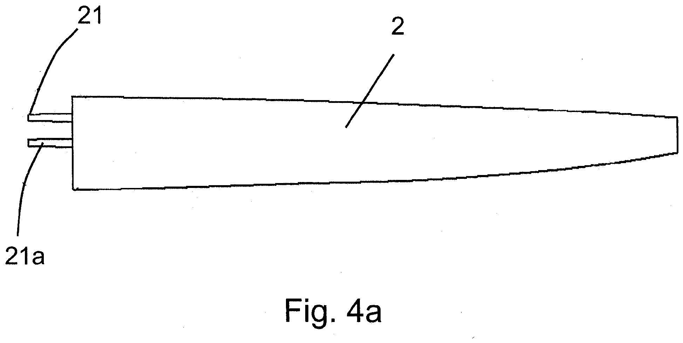

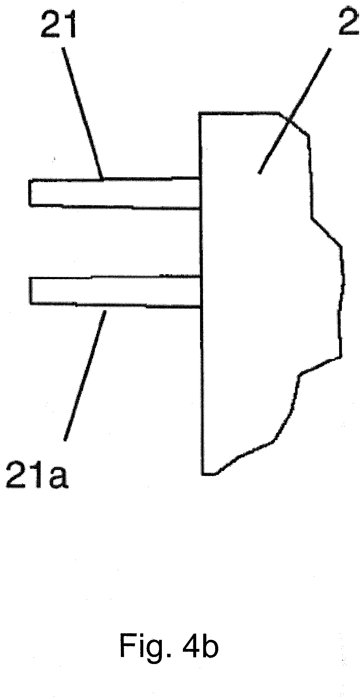

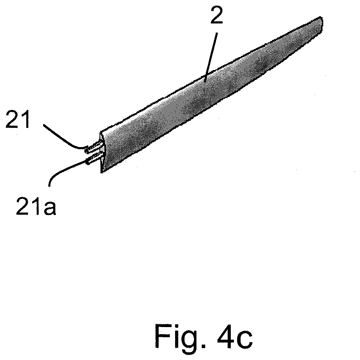

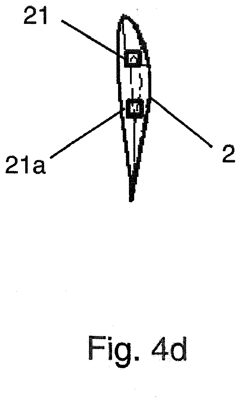

A third embodiment is explained based on the illustration of Figs. 4a-4d. Fig. 4a shows a tip blade section 2 having an additional protrusion 21a which is provided in addition to the protrusion 21 of the first embodiment. Fig. 4b shows a detail of the joining end portion 20 of the tip blade section 2 according to the third embodiment, while Fig. 4c shows a three dimensional view of the tip blade section 2 according to the third embodiment and Fig. 4d shows a cross sectional view of the tip blade section 2 according to the third embodiment. In the embodiment, the corresponding root blade section 1 has two cavities corresponding to the protrusions 21, 21a.

According to this embodiment, the strength of the joint is enhanced and the tilt or rotation of the blade sections 1, 2 relative to each other can be prevented. In the illustrated embodiment, the protrusions can be circular. However, any other shape is within the scope.

### FOURTH EMBODIMENT

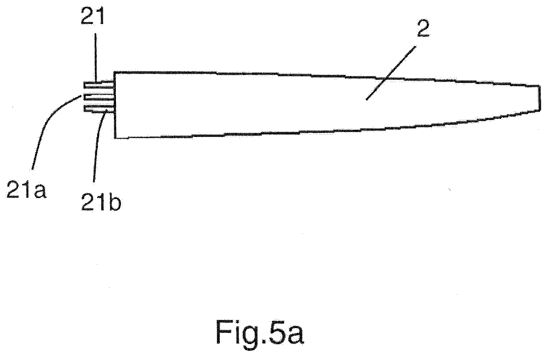

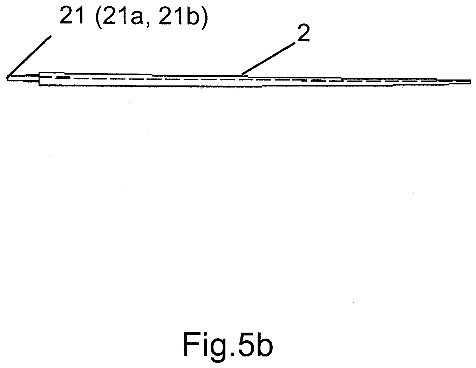

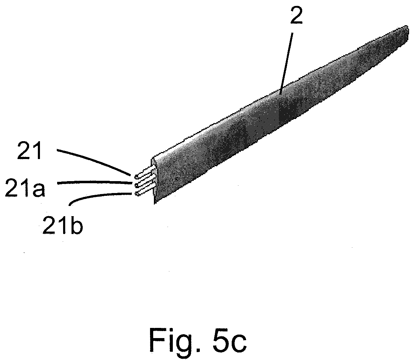

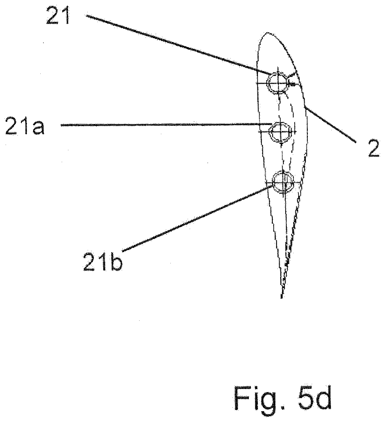

A fourth embodiment is explained based on the illustrations of Figs. 5a-5d. Fig. 5a shows a tip blade section 2 in a top view having additional protrusions 21a and 21b which are provided in addition to the protrusion 21 of the first embodiment. Fig. 5b shows a side view of the tip blade section 2 shown in Fig. 5a. Fig. 5c shows a three dimensional view of the tip blade section 2 of Fig. 5a and Fig. 5d is a cross sectional view of the tip blade section 2 of Fig. 5a. In the embodiment, the corresponding root blade section 1 has three cavities corresponding to the protrusions 21, 21a, 21b.

According to this embodiment, the strength of the joint is further enhanced and the tilt or rotation of the blade sections 1, 2 relative to each other can be surely prevented. In the illustrated embodiment, the protrusions 21, 21a, 21b can be circular. However, any other shape is within the scope.

### FIFTH EMBODIMENT

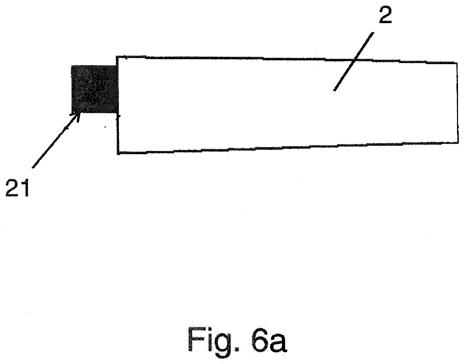

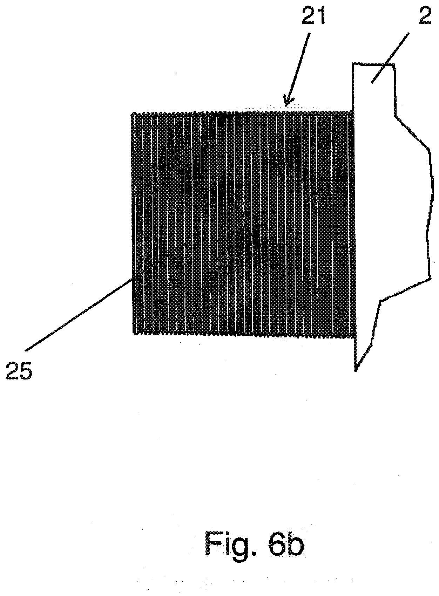

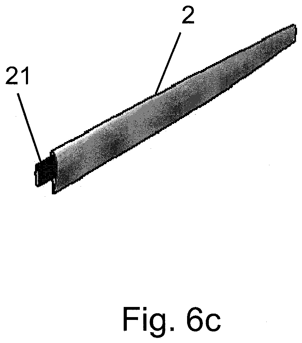

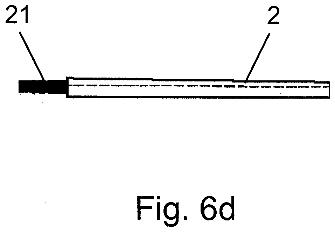

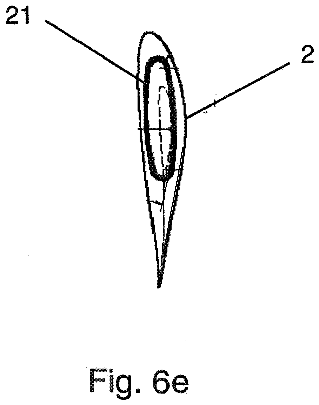

A fifth embodiment is explained based on the illustration of Figs. 6a-6e. Fig. 6a shows a tip blade section 2 in a top view having a protrusion 21 which is elliptic. Fig. 6b is a detailed illustration of the tip blade section 2 of Fig. 6a. Fig. 6c is a three dimensional view of the tip blade section 2 of Fig. 6a. Fig. 6d is a side view of the tip blade section 2 of Fig. 6a and Fig. 6e is a cross sectional view of the tip blade section 2 of Fig. 6a. The cavity 11 which is not shown in this illustration has the same elliptic shape. This shape provides a strong joint and optimum space utilization in the specific application to blades which are elements having a flat profile due to the required aerodynamic properties. That is, the cross sectional areas of the protrusion 21 and the cavity 11 are adapted to the flat profile of the blade sections 1, 2.

### SIXTH EMBODIMENT

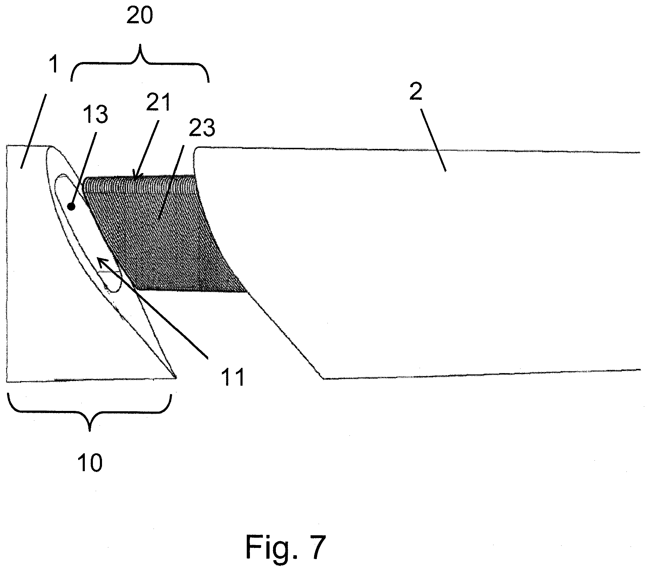

A sixth embodiment is explained based on the illustration of Fig. 7. In this illustration, the root blade section 1 has a cavity 11 which has an elongated cross-section. The tip blade section 2 has a protrusion 21 which has a cross-section of a corresponding shape in the contracted position of the cavity 11 as explained below.

The main difference of the present embodiment and the first to fifth embodiment is the fact that in the present embodiment, the slits 12a, 12b or interruptions of material are not provided. The present embodiment is arranged such that the joining end portion 10 of the blade section 1 having the cavity 11 is formed by a material which allows a deformation to a certain extent. This property is employed in this embodiment to enable the contraction of the cavity 11 by pressing the outer surface 14 of the root blade section 1 in the area of the joining end portion 10 without the provision of slits 12a, 12b or interruptions of material.

The shape of the cavity 11 according to this embodiment is preferably such that a contraction of the cavity 11 is enabled. Specifically, the shape can be elongated with respect to the cross section of the cavity 11. Therefore, the cavity 11 can be flattened by pressing the joining end portion 10 of the root blade section 1 in the area of the joining end portions 10, in particular, pressing towards the long sides of the elongated cavity 11. However, this is not restrictive and it is possible to press at different locations as long as the cross sectional area of the cavity 11 is decreased by such pressing.

The procedure of joining explained in the above first to fifth embodiments can be completely applied to this arrangement which has no slits 12a, 12b or interruptions of material. Further, the introduction of resin can be performed in the same manner as in the previous embodiments except that the inlet and outlet is not interrelated to the slits 12a, 12b. Therefore, in this embodiment, designated openings are provided in the joining end portion 10 of the root blade section 1 for this purpose.

The inner and outer engagement means 15, 25 which are provided in the outer surface 23 of the protrusion 21 and the inner surface 13 of the cavity 11, respectively, can be provided in the same manner as in the previous embodiments.

The sixth embodiment enables the contractibility of the cavity 11 based on properties relating to the material of the blade section 1. The shape of the cavity 11 which is elongated in the embodiment provides an advantageous property in cooperation with the properties relating to the material.

The above sixth embodiment can be combined with the concepts explained for the first to fifth embodiments if applicable.

### MODIFICATIONS

In the following, modifications of the embodiments are explained.

The expanded position of the cavity is present when no load is applied to the joining end portion of the blade section having the cavity in the embodiments above. However, it is possible to provide an intermediate state in which the position of the cavity is in an intermediate position when no load is applied and to expand the cavity to the expanded position by introducing the protrusion into the cavity. It is possible to arrange the engagement means such that in the course of introducing the protrusion into the cavity, the engagement means on the protrusion are brought into contact to those on the inner surface of the cavity. Therefore, a ratcheting effect can be achieved such that a pre-assembled state is achieved by introducing the protrusion into the cavity which provides a preliminary assembly which includes detachably attached blade sections.

In the case of this embodiment, the cavity can be formed such that in the non-contracted position the cross section of the cavity is slightly larger at the end of the blade section than at the bottom or ground of the cavity. That is, the cavity is slightly tapered with an angle of tapering of about 1° as example as shown in Fig. 7. In this case, the protrusion can be formed cylindrical, in particular with a constant cross sectional shape, while the inner surface of the cavity achieves a cylindrical shape when in the contracted position which eventually coincides with the outer surface of the protrusion.

By pressing this preliminary assembly as discussed above, the blade sections are permanently joined to each other.

In addition, it is possible to provide the blade section having the cavity in the contracted state when no load is applied. The cavity can be opened to the expanded position by exerting a corresponding force. After this action, the protrusion can be introduced into the cavity and the permanent joint can be achieved as in the previous embodiments.

As discussed above, the interruption of material can be formed as at least one slit as shown in the drawings. In a modification, which is not shown in the drawings, the interruption of material can be formed as non linear slit such as zigzag cut or as meander shaped cut in the blade section having said cavity with respect to the longitudinal direction of the blade section. It is possible to form the interruption of material by an array of holes, which is not shown in the drawings, wherein the holes extend from the inner surface of the cavity to the outer surface of the blade section having the cavity. The holes can be circular holes. Alternatively, the holes can have an elliptic shape allowing their contraction and, thus, the contraction of the cavity. It is even possible to arrange only a single hole in the blade section. As further alternative, which is not shown in the drawings, the interruption of material can be formed as at least one partial slit, which extends from the inner surface of the cavity to towards the outer periphery of the blade section having the cavity, wherein the slit terminates before reaching the outer surface of the cavity. The above modifications can be appropriately combined.

The number of slits can be one or two. In particular, the number of slits is not restricted as long as the above effect is achieved.

In a modification, both of the blade sections include at least one cavity and at least one protrusion such that the assembly comprises at least two protrusions and at least to cavities which are correspondingly mated.

In a further modification, the mating surfaces of the blade sections which are brought into contact in the longitudinal direction in the course of joining are formed inclined with respect to the longitudinal direction as schematically shown in Fig. 7.

In the embodiments, the blade assembly is explained as having two blade sections, i.e., a root blade section and a tip blade section. This is only an example. The embodiments can be modified such that the blade assembly comprises more than two, e.g., three blade sections. According to the concept of the present subject matter, two blade sections are joinable as defined in the application and in case that more than two blade sections are present in a blade assembly, this concept is applicable to three or more blade sections present in the blade assembly.

Moreover, the embodiments are explained in view of a root blade section and a tip blade section. This is not restrictive. Rather, the root blade section and the tip blade section can be interchanged while the concept of the present subject matter is achieved.

## Claims

1. A blade assembly for a wind turbine rotor, the blade assembly comprising at least two blade sections (1, 2) being longitudinally joinable at respective joining end portions (10, 20) for forming a blade, one (1) of said blade sections having at least one cavity (11) in its joining end portion (10) and the other (2) of said blade sections having at least one protrusion (21) at its joining end portion (20), wherein said cavity (11) is contractible to a contracted position in a direction which is substantially perpendicular to a longitudinal direction of the blade
wherein at least one interruption of a material is formed extending from an inner surface (13) of said at least one cavity (11) to an outer surface (14) of said blade section (1) having said at least one cavity (11),
wherein said at least one interruption of material extends from an end of said blade section (1) at its joining end portion (10) in the longitudinal direction of said blade section (1).

2. The blade assembly according to claim 1, wherein a cross section of said cavity (11) is smaller in said contracted position than in an expanded position, and/or wherein a material of said blade section (1) having said cavity (11) is deformable at least at said joining end portion (10).

3. The blade assembly according to claim 1, wherein said at least one interruption of material is formed as at least one slit (12a; 12b).

4. The blade assembly according to one of the preceding claims, wherein said protrusion (21) is insertable into said cavity (11) for joining said at least two blade sections (1, 2).

5. The blade assembly according to claim 3 or 4, wherein said cavity (11) is expandable to said expanded position with said at least one slit (12a; 12b) being open and contractible to said contracted position with said at least one slit (12a; 12b) being closed.

6. The blade assembly according to claim 3, wherein a cross-sectional shape of said protrusion (21) substantially matches a cross-sectional shape of said cavity (11) when in said contracted position.

7. The blade assembly according to one of the preceding claims, wherein said cross-sectional shapes of said at least one protrusion (21) and of said cavity (11) are non-circular.

8. The blade assembly according to one of the preceding claims, wherein inner engagement means (IS) are provided in the inner surface (13) of said cavity (11), and outer engagement means (25) are provided in an outer surface (23) of said protrusion (21), wherein said inner engagement means (IS) and said outer engagement means (25) are locked to each other when said cavity (11) is in said contracted position, and/or wherein said protrusion (21) is insertable into said cavity (11) when said cavity (11) is in the expanded position, whereas said protrusion (21), when inserted into said cavity (11), is locked in said cavity (11) when said cavity (11) is in the contracted position.

9. The blade assembly according to claim 6, wherein said inner and outer engagement means (IS, 25) are formed as inner serrations (IS) at the inner surface (13) of said cavity (11) and outer serrations (25) at the outer surface (23) of said protrusion (21), wherein said serrations (IS, 25) are at least partially oriented substantially perpendicularly to the longitudinal direction of the respective blade sections (1, 2).

10. The blade assembly according to one of claims 8-9, wherein said inner serrations (IS) and said outer serrations (25) are arranged to provide a locking engagement of said protrusion (21) in said cavity (11) when said cavity (11) is in the contracted position.

11. The blade assembly according to one of claims 3-10, wherein two slits (12a, 12b) are provided in said joining end portion (10) of said blade section (1) having said cavity (11), wherein said two slits (12a, 12b) are provided at opposite sides of said cavity (11).

12. The blade assembly according to one of the preceding claims, wherein at least one predetermined flow path is formed in a boundary between the outer surface (23) of said protrusion (21) and the inner surface (13) of said cavity (11) when said protrusion (21) is inserted in said cavity (11) and said cavity (11) is in the contracted position, preferably wherein said at least one flow path is zigzag or meander shaped.

13. The blade assembly according to claim 12, wherein said at least one flow path has at least one inlet for introducing resin, in particular thermosetting resin, to flow along said flow path and at least one outlet for discharging drain resin as overflow, and/or wherein a plurality of flow paths are provided which are parallel and/or branched with respect to each other,
and/or wherein said blade assembly is joinable to form a blade by inserting said protrusion (21) into said cavity (11) with the cavity (11) being in an expanded position, contracting said cavity (11) by pressing said blade section and introducing resin into said flow path with an amount which fills said flow path, and curing, preferably thermosetting, said resin.

14. The blade assembly according to one of the preceding claims, wherein said cavity (11) is in the expanded position prior to joining said at least two blade sections (1, 2) and wherein said cavity is forcible to the contracted position by exerting a predetermined pressure to an outer surface (14) of said blade section (1) having said cavity (11) and/or
wherein in addition to said cavity (11), one or more additional cavities (11a, 11b) are provided in the same joining end portion, and wherein in addition to said protrusion, one or more additional protrusions (21a, 21b) are provided in the same joining end portion, wherein the number of cavities corresponds to the number of protrusions and/or
wherein in addition to said cavity (11), one or more protrusions are provided in the same joining end portion, and wherein in addition to said protrusion, one or more cavities are provided in the same joining end portion, wherein the number of cavities corresponds to the number of protrusions.

15. A method for manufacturing a blade for a wind turbine rotor from at least the assembly according to one of claims 1-14, comprising the following steps:
- keeping said at least one cavity (11) in an expanded or non-contracted position,
- longitudinally inserting said at least one protrusion (21) into said at least one cavity (11),
- bringing said at least one cavity (11) in a contracted position;
- applying a step of keeping said at least one cavity (11) in the contracted position.

16. The method according to claim 15, wherein the step of bringing said cavity (11) in a contracted position comprises pressing said outer surface (14) of said blade section (1) having said cavity (11).

17. The method according to claim 15 or 16, wherein the step of keeping said cavity (11) in the contracted position comprises applying resin by pressing said resin into an area between said protrusion (21) and said cavity (11) and/or into an area of said interruption of material, preferably further comprising a step of monitoring parameters while pressing said resin, said parameters including an amount of applied resin, a temperature of said resin and a pressure of said resin, more preferably further comprising monitoring an overflow of said resin and controlling the amount of applied resin and/or confirming a sufficient amount of applied resin based on the monitored amount of overflow.

18. The method according to claim 17, comprising curing said resin and thereby fixing said at least two blade sections (1, 2) to each other, preferably wherein the step of curing said resin includes thermosetting said resin by applying heat to said resin.

19. A blade for a wind turbine rotor having a predetermined profile manufactured by a blade assembly according to one of claims 1-14 or a method according to one of claims 15-18.

20. A wind turbine rotor having a hub for driving a generator of a wind turbine, the wind turbine rotor having at least one blade according to claim 19.

21. A wind turbine having a generator and a wind turbine rotor according to claim 20, wherein said generator is drivable by the wind turbine rotor.

22. A Method for manufacturing a blade assembly according to one of claims 12 or 13, wherein the blade assembly is joined to form a blade by
• inserting said protrusion (21) into said cavity (11) with the cavity (11) being in an expanded position,
• contracting said cavity (11) by pressing said blade section and introducing resin into said flow path with an amount which fills said flow path, and
• curing, preferably thermosetting, said resin.

## Patentansprüche

1. Schaufelanordnung für einen Windturbinenrotor, wobei die Schaufelanordnung mindestens zwei Schaufelabschnitte (1, 2) aufweist, die an entsprechenden Verbindungsendabschnitten (10, 20) in Längsrichtung verbunden werden können, um eine Schaufel zu bilden, wobei einer (1) der Schaufelabschnitte mindestens einen Hohlraum (11) in seinem Verbindungsendabschnitt (10) aufweist, und der andere (2) der Schaufelabschnitte mindestens einen Vorsprung (21) an seinem Verbindungsendabschnitt (20) aufweist, wobei der Hohlraum (11) in einer Richtung, die im Wesentlichen senkrecht zu einer Längsrichtung der Schaufel ist, in eine zusammengezogene Position zusammengezogen werden kann,
wobei mindestens eine Materialunterbrechung gebildet ist, die sich von einer Innenfläche (13) des mindestens einen Hohlraums (11) zu einer Außenfläche (14) des Schaufelabschnitts (1), der den mindestens einen Hohlraum (11) aufweist, erstreckt,
wobei die mindestens eine Materialunterbrechung sich von einem Ende des Schaufelabschnitts (1) an seinem Verbindungsendabschnitt (10) in der Längsrichtung des Schaufelabschnitts (1) erstreckt.

2. Schaufelanordnung nach Anspruch 1, wobei ein Querschnitt des Hohlraums (11) in der zusammengezogenen Position kleiner als in einer expandierten Position ist und/oder wobei ein Material des Schaufelabschnitts (1), der den Hohlraum (11) aufweist, zumindest an dem Verbindungsendabschnitt (10) verformbar ist.

3. Schaufelanordnung nach Anspruch 1, wobei die mindestens eine Materialunterbrechung als mindestens ein Schlitz (12a, 12b) ausgebildet ist.

4. Schaufelanordnung nach einem der vorhergehenden Ansprüche, wobei der Vorsprung (21) in den Hohlraum (11) zum Verbinden der mindestens zwei Schaufelabschnitte (1, 2) eingeführt werden kann.

5. Schaufelanordnung nach Anspruch 3 oder 4, wobei der Hohlraum (11) in die expandierte Position expandiert werden kann, wobei der mindestens eine Schlitz (12a; 12b) offen ist, und in die zusammengezogene Position zusammengezogen werden kann, wobei der mindestens eine Schlitz (12a; 12b) geschlossen ist.

6. Schaufelanordnung nach Anspruch 3, wobei eine Querschnittsform des Vorsprungs (21) in der zusammengezogenen Position im Wesentlichen mit einer Querschnittsform des Hohlraums (11) übereinstimmt.

7. Schaufelanordnung nach einem der vorhergehenden Ansprüche, wobei die Querschnittsformen des mindestens einen Vorsprungs (21) und des Hohlraums (11) nicht kreisförmig sind.

8. Schaufelanordnung nach einem der vorhergehenden Ansprüche, wobei innere Verbindungsmittel (IS) in der Innenfläche (13) des Hohlraums (11) vorgesehen sind, und äußere Verbindungsmittel (25) in einer Außenfläche (23) des Vorsprungs (21) vorgesehen sind, wobei die inneren Verbindungsmittel (IS) und die äußeren Verbindungsmittel (25) miteinander verriegelt sind, wenn der Hohlraum (11) sich in der zusammengezogenen Position befindet, und/oder wobei der Vorsprung (21) in den Hohlraum (11) eingeführt werden kann, wenn der Hohlraum (11) sich in der expandierten Position befindet, während der Vorsprung (21), wenn dieser in den Hohlraum (11) eingeführt wird, in dem Hohlraum (11) verriegelt ist, wenn der Hohlraum (11) sich in der zusammengezogenen Position befindet.

9. Schaufelanordnung nach Anspruch 6, wobei die inneren und äußeren Verbindungsmittel (IS, 25) als innere Verzahnungen (IS) an der Innenfläche (13) des Hohlraums (11) und äußere Verzahnungen (25) an der Außenfläche (23) des Vorsprungs (21) ausgebildet sind, wobei die Verzahnungen (IS, 25) mindestens teilweise im Wesentlichen senkrecht zu der Längsrichtung des entsprechenden Schaufelabschnitts (1, 2) ausgerichtet sind.

10. Schaufelanordnung nach einem der Ansprüche 8 bis 9, wobei die inneren Verzahnungen (IS) und die äußeren Verzahnungen (25) derart angeordnet sind, einen Verriegelungseingriff des Vorsprungs (21) in dem Hohlraum (11) bereitzustellen, wenn sich der Hohlraum (11) in der zusammengezogenen Position befindet.

11. Schaufelanordnung nach einem der Ansprüche 3 bis 10, wobei zwei Schlitze (12a, 12b) in dem Verbindungsendabschnitt (10) des Schaufelabschnitts (1) vorgesehen sind, der den Hohlraum (11) aufweist, wobei die zwei Schlitze (12a, 12b) an gegenüberliegenden Seiten des Hohlraums (11) vorgesehen sind.

12. Schaufelanordnung nach einem der vorhergehenden Ansprüche, wobei mindestens ein vorbestimmter Strömungspfad in einer Grenze zwischen der Außenfläche (23) des Vorsprungs (21) und der Innenfläche (13) des Hohlraums (11) gebildet ist, wenn der Vorsprung (21) in den Hohlraum (11) eingeführt ist und der Hohlraum (11) sich in der zusammengezogenen Position befindet, bevorzugt wobei der mindestens eine Strömungspfad zickzackförmig oder mäanderförmig ist.

13. Schaufelanordnung nach Anspruch 12, wobei der mindestens eine Strömungspfad mindestens einen Einlass zum Zuführen von Harz, insbesondere von warm aushärtendem Harz, das den Strömungspfad entlang fließen soll, und mindestens einen Auslass zum Ausgeben von Ablaufharz als Überlauf aufweist, und/oder wobei mehrere Strömungspfade vorgesehen sind, die parallel und/oder verzweigt bezüglich einander verlaufen,
und/oder wobei die Schaufelanordnung verbunden werden kann, um eine Schaufel zu bilden, durch Einführen des Vorsprungs (21) in den Hohlraum (11), wobei der Hohlraum (11) sich in einer expandierten Position befindet, Zusammenziehen des Hohlraums (11) durch Zusammendrücken des Schaufelabschnitts und Einführen von Harz in den Strömungspfad, mit einer Menge, die den Strömungspfad füllt, und Härten, bevorzugt Warmaushärten, des Harzes.

14. Schaufelanordnung nach einem der vorhergehenden Ansprüche, wobei der Hohlraum (11) sich vor dem Verbinden der mindestens zwei Schaufelabschnitte (1, 2) in der expandierten Position befindet, und wobei der Hohlraum in die zusammengezogene Position gedrückt werden kann durch Anlegen eines vorbestimmten Drucks an eine Außenfläche (14) des Schaufelabschnitts (1), der den Hohlraum (11) aufweist, und/oder
wobei zusätzlich zu dem Hohlraum (11) ein oder mehrere zusätzliche Hohlräume (11a, 11b) in demselben Verbindungsendabschnitt vorgesehen sind, und wobei zusätzlich zu dem Vorsprung ein oder mehrere zusätzliche Vorsprünge (21a, 21b) in demselben Verbindungsendabschnitt vorgesehen sind, wobei die Anzahl der Hohlräume der Anzahl der Vorsprünge entspricht und/oder
wobei zusätzlich zu dem Hohlraum (11) ein oder mehrere Vorsprünge in demselben Verbindungsendabschnitt vorgesehen sind, und wobei zusätzlich zu dem Vorsprung ein oder mehrere Hohlräume in demselben Verbindungsendabschnitt vorgesehen sind, wobei die Anzahl der Hohlräume der Anzahl der Vorsprünge entspricht.

15. Verfahren zum Herstellen einer Schaufel für einen Windturbinenrotor aus mindestens der Anordnung nach einem der Ansprüche 1 bis 14, mit den folgenden Schritten:
- Halten des mindestens einen Hohlraums (11) in einer expandierten oder nicht zusammengezogenen Position,
- Einführen mindestens eines Vorsprungs (21) in den mindestens einen Hohlraum (11) in Längsrichtung,
- Überführen des mindestens einen Hohlraums (11) in eine zusammengezogene Position,
- Anwenden eines Schritts des Haltens des mindestens einen Hohlraums (11) in der zusammengezogenen Position.

16. Verfahren nach Anspruch 15, wobei der Schritt des Überführens des Hohlraums (11) in eine zusammengezogene Position ein Drücken der Außenfläche (14) des Schaufelabschnitts (1), der den Hohlraum (11) aufweist, beinhaltet.

17. Verfahren nach Anspruch 15 oder 16, wobei der Schritt des Haltens des Hohlraums (11) in der zusammengezogenen Position ein Auftragen von Harz durch Drücken des Harzes in einen Bereich zwischen dem Vorsprung (21) und dem Hohlraum (11) und/oder in einen Bereich der Materialunterbrechung aufweist, und bevorzugt ferner einen Schritt des Parameterüberwachens aufweist, während das Harz gedrückt wird, wobei die Parameter eine Menge an aufgetragenem Harz, eine Temperatur des Harzes und einen Druck des Harzes beinhalten, und weiter bevorzugt ferner ein Überwachen eines Überlaufs des Harzes und Steuern der Menge an aufgetragenem Harz und/oder Bestätigen einer ausreichenden Menge an aufgetragenem Harz basierend auf der überwachten Menge an Überlauf aufweist.

18. Verfahren nach Anspruch 17, aufweisend das Härten des Harzes und dadurch Fixieren der mindestens zwei Schaufelabschnitte (1, 2) aneinander, bevorzugt wobei der Schritt des Härtens des Harzes ein Warmaushärten des Harzes durch Anlegen von Wärme an das Harz aufweist.

19. Schaufel für einen Windturbinenrotor mit einem vorbestimmten Profil, das durch eine Schaufelanordnung gemäß einem der Ansprüche 1 bis 14 hergestellt wird, oder durch ein Verfahren gemäß einem der Ansprüche 15 bis 18.

20. Windturbinenrotor mit einer Nabe zum Antreiben eines Generators einer Windturbine, wobei der Windturbinenrotor mindestens eine Schaufel gemäß Anspruch 19 aufweist.

21. Windturbine mit einem Generator und einem Windturbinenrotor nach Anspruch 20, wobei der Generator von dem Windturbinenrotor angetrieben werden kann.

22. Verfahren zum Herstellen einer Schaufelanordnung nach einem der Ansprüche 12 oder 13, wobei die Schaufelanordnung verbunden wird, um eine Schaufel durch Folgendes zu bilden:
• Einführen des Vorsprungs (21) in den Hohlraum (11), wobei sich der Hohlraum (11) in einer expandierten Position befindet,
• Zusammenziehen des Hohlraums (11) durch Drücken des Schaufelabschnitts und Einführen von Harz in den Strömungspfad in einer Menge, die den Strömungspfad füllt, und
• Härten, bevorzugt Warmaushärten, des Harzes.

## Revendications

1. Ensemble de pale pour un rotor d'éolienne, l'ensemble de pale comprenant au moins deux sections de pale (1, 2) assemblables longitudinalement au niveau de portions d'extrémité d'assemblage (10, 20) respectives pour former une pale, l'une (1) desdites sections de pale ayant au moins une cavité (11) dans sa portion d'extrémité d'assemblage (10) et l'autre (2) desdites sections de pale ayant au moins une protubérance (21) au niveau de sa portion d'extrémité d'assemblage (20), dans lequel ladite cavité (11) est contractable en une position contractée dans une direction qui est sensiblement perpendiculaire à une direction longitudinale de la pale
dans lequel au moins une interruption d'un matériau est formée s'étendant depuis une surface interne (13) de ladite au moins une cavité (11) jusqu'à une surface externe (14) de ladite section de pale (1) ayant ladite au moins une cavité (11),
dans lequel ladite au moins une interruption de matériau s'étend depuis une extrémité de ladite section de pale (1) au niveau de sa portion d'extrémité d'assemblage (10) dans la direction longitudinale de ladite section de pale (1).

2. Ensemble de pale selon la revendication 1, dans lequel une coupe transversale de ladite cavité (11) est plus petite dans ladite position contractée que dans une position agrandie, et/ou dans lequel un matériau de ladite section de pale (1) ayant ladite cavité (11) est déformable au moins au niveau de ladite portion d'extrémité d'assemblage (10).

3. Ensemble de pale selon la revendication 1, dans lequel ladite au moins une interruption de matériau est formée en tant qu'au moins une fente (12a ; 12b).

4. Ensemble de pale selon l'une des revendications précédentes, dans lequel ladite protubérance (21) est insérable dans ladite cavité (11) pour assembler lesdites au moins deux sections de pale (1, 2).

5. Ensemble de pale selon la revendication 3 ou 4, dans lequel ladite cavité (11) est agrandissable en ladite position agrandie avec ladite au moins une fente (12a ; 12b) ouverte, et contractable en ladite position contractée avec ladite au moins une fente (12a ; 12b) fermée.

6. Ensemble de pale selon la revendication 3, dans lequel une forme en coupe transversale de ladite protubérance (21) concorde sensiblement avec une forme en coupe transversale de ladite cavité (11) lorsqu'elle est dans ladite position contractée.

7. Ensemble de pale selon l'une des revendications précédentes, dans lequel lesdites formes en coupe transversale de ladite au moins une protubérance (21) et de ladite cavité (11) sont non circulaires.

8. Ensemble de pale selon l'une des revendications précédentes, dans lequel des moyens d'enclenchement internes (IS) sont prévus dans la surface interne (13) de ladite cavité (11), et des moyens d'enclenchement externes (25) sont prévus dans une surface externe (23) de ladite protubérance (21), dans lequel lesdits moyens d'enclenchement internes (IS) et lesdits moyens d'enclenchement externes (25) sont verrouillés l'un à l'autre lorsque ladite cavité (11) est dans ladite position contractée, et/ou dans lequel ladite protubérance (21) est insérable dans ladite cavité (11) lorsque ladite cavité (11) est dans la position agrandie, tandis que ladite protubérance (21), lorsqu'elle est insérée dans ladite cavité (11), est verrouillée dans ladite cavité (11) lorsque ladite cavité (11) est dans la position contractée.

9. Ensemble de pale selon la revendication 6, dans lequel lesdits moyens d'enclenchement internes et externes (IS, 25) sont formés en tant que dentelures internes (IS) au niveau de la surface interne (13) de ladite cavité (11) et en tant que dentelures externes (25) au niveau de la surface externe (23) de ladite protubérance (21), dans lequel lesdites dentelures (IS, 25) sont orientées au moins partiellement de façon sensiblement perpendiculaire à la direction longitudinale des sections de pale (1, 2) respectives.

10. Ensemble de pale selon l'une des revendications 8 et 9, dans lequel lesdites dentelures internes (IS) et lesdites dentelures externes (25) sont agencées pour fournir un enclenchement de verrouillage de ladite protubérance (21) dans ladite cavité (11) lorsque ladite cavité (11) est dans la position contractée.

11. Ensemble de pale selon l'une des revendications 3 à 10, dans lequel deux fentes (12a, 12b) sont prévues dans ladite portion d'extrémité d'assemblage (10) de ladite section de pale (1) ayant ladite cavité (11), dans lequel lesdites deux fentes (12a, 12b) sont prévues au niveau de côtés opposés de ladite cavité (11).

12. Ensemble de pale selon l'une des revendications précédentes, dans lequel au moins un chemin d'écoulement prédéterminé est formé dans une limite entre la surface externe (23) de ladite protubérance (21) et la surface interne (13) de ladite cavité (11) lorsque ladite protubérance (21) est insérée dans ladite cavité (11) et que ladite cavité (11) est dans la position contractée, de préférence dans lequel ledit au moins un chemin d'écoulement est en forme de zigzag ou de méandre.

13. Ensemble de pale selon la revendication 12, dans lequel ledit au moins un chemin d'écoulement a au moins un orifice d'entrée pour introduire une résine, en particulier une résine thermodurcissable, pour qu'elle s'écoule le long dudit chemin d'écoulement et au moins un orifice de sortie pour évacuer une résine de drainage en débordement, et/ou dans lequel une pluralité de chemins d'écoulement sont prévus qui sont parallèles et/ou ramifiés les uns par rapport aux autres, et/ou
dans lequel ledit ensemble de pale est assemblable pour former une pale par l'insertion de ladite protubérance (21) dans ladite cavité (11) avec la cavité (11) dans une position agrandie, la contraction de ladite cavité (11) par la pression de ladite section de pale et l'introduction d'une résine dans ledit chemin d'écoulement avec une quantité qui remplit ledit chemin d'écoulement, et le durcissement, de préférence le thermodurcissement, de ladite résine.

14. Ensemble de pale selon l'une des revendications précédentes, dans lequel ladite cavité (11) est dans la position agrandie avant assemblage desdites au moins deux sections de pale (1, 2) et dans lequel ladite cavité peut être forcée en la position contractée en exerçant une pression prédéterminée sur une surface externe (14) de ladite section de pale (1) ayant ladite cavité (11), et/ou
dans lequel en plus de ladite cavité (11), une ou plusieurs cavités supplémentaires (11a, 11b) sont prévues dans la même portion d'extrémité d'assemblage, et dans lequel en plus de ladite protubérance, une ou plusieurs protubérances supplémentaires (21a, 21b) sont prévues dans la même portion d'extrémité d'assemblage, dans lequel le nombre de cavités correspond au nombre de protubérances, et/ou
dans lequel en plus de ladite cavité (11), une ou plusieurs protubérances sont prévues dans la même portion d'extrémité d'assemblage, et dans lequel en plus de ladite protubérance, une ou plusieurs cavités sont prévues dans la même portion d'extrémité d'assemblage, dans lequel le nombre de cavités correspond au nombre de protubérances.

15. Procédé de fabrication d'une pale pour un rotor d'éolienne à partir au moins de l'ensemble selon l'une des revendications 1 à 14, comprenant les étapes suivantes :
• le fait de conserver ladite au moins une cavité (11) dans une position agrandie ou non contractée,
• l'insertion longitudinale de ladite au moins une protubérance (21) dans ladite au moins une cavité (11),
• le fait d'amener ladite au moins une cavité (11) dans une position contractée ;
• l'application d'une étape conservant ladite au moins une cavité (11) dans la position contractée.

16. Procédé selon la revendication 15, dans lequel l'étape d'amenée de ladite cavité (11) dans une position contractée comprend la pression de ladite surface externe (14) de ladite section de pale (1) ayant ladite cavité (11).

17. Procédé selon la revendication 15 ou 16, dans lequel l'étape conservant ladite cavité (11) dans la position contractée comprend l'application d'une résine par pression de ladite résine dans une zone entre ladite protubérance (21) et ladite cavité (11) et/ou dans une zone de ladite interruption de matériau, de préférence comprenant en outre une étape de surveillance de paramètres pendant la pression de ladite résine, lesdits paramètres comportant une quantité de résine appliquée, une température de ladite résine et une pression de ladite résine, de manière davantage préférée comprenant en outre la surveillance d'un débordement de ladite résine et la commande de la quantité de résine appliquée et/ou la confirmation d'une quantité suffisante de résine appliquée d'après la quantité surveillée de débordement.

18. Procédé selon la revendication 17, comprenant le durcissement de ladite résine et ainsi, la fixation desdites au moins deux sections de pale (1, 2) l'une à l'autre, de préférence dans lequel l'étape de durcissement de ladite résine comporte le thermodurcissement de ladite résine par application de chaleur à ladite résine.

19. Pale pour un rotor d'éolienne ayant un profil prédéterminé, fabriquée par un ensemble de pale selon l'une des revendications 1 à 14 ou un procédé selon l'une des revendications 15 à 18.

20. Rotor d'éolienne ayant un moyeu pour entraîner une génératrice d'une éolienne, le rotor d'éolienne ayant au moins une pale selon la revendication 19.

21. Éolienne ayant une génératrice et un rotor d'éolienne selon la revendication 20, dans laquelle ladite génératrice est entraînable par le rotor d'éolienne.

22. Procédé de fabrication d'un ensemble de pale selon l'une des revendications 12 ou 13, dans lequel l'ensemble de pale est assemblé pour former une pale par
• l'insertion de ladite protubérance (21) dans ladite cavité (11) avec la cavité (11) dans une position agrandie,
• la contraction de ladite cavité (11) par pression de ladite section de pale et introduction d'une résine dans ledit chemin d'écoulement avec une quantité qui remplit ledit chemin d'écoulement, et
• le durcissement, de préférence le thermodurcissement, de ladite résine.
